# EUROPÄISCHE PATENTSCHRIFT

(11) **EP 0 292 694 B1**
(45) Veröffentlichungstag und Bekanntmachung des Hinweises auf die Patenterteilung: **22.06.1994**
(21) Anmeldenummer: 88106290.5
(22) Anmeldetag: 20.04.1988
(51) Int. Cl.: H04N 17/00, H04N 5/78

(54) **Einrichtung zur Abstimmung eines Videorecorders**
Video recorder tuning device
Dispositif d'accord pour appareil enregisteur vidéo

(30) Priorität: 27.05.1987 DE 3718017
(43) Veröffentlichungstag der Anmeldung: 30.11.1988
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Schülein, Reinhard GRUNDIG E.M.V. Max Grundig, D-8510 Fürth/Bay (DE)

(56) Entgegenhaltungen:
- DE-A- 2 918 846
- DE-A- 3 104 843
- DE-A- 3 123 426
- DE-A- 3 406 890
- DE-B- 1 932 936

## Beschreibung

Die Erfindung betrifft eine Einrichtung zur Abstimmung eines Videorecorders mit den im Oberbegriff des Anspruchs 1 angegebenen Merkmalen.

Bei der erstmaligen Abstimmung eines Videorecorders auf ein zur Videorecorderwiedergabe vorgesehenes Fernsehempfangsgerät wird gewöhnlich das Ausgangssignal des Videorecorders mit Hilfe eines in den Videorecorder eingebauten Modulators eines bestimmten Fernsehkanal zugeordnet. Auf diesen voreingestellten Fernsehkanal des Modulators im Videorecorder muß bei der ersten Inbetriebnahme die Abstimmeinrichtung des Fernsehempfängers derart eingestellt werden, daß bei Betätigung eines bestimmten Kanalwahltaste am Fernsehmpfänger das Ausgangssignal des Videorecorders in bester Bild und Tonqualität wiedergegeben wird.

Hierzu sind bereits Einrichtungen bekannt, bei denen durch Betätigung besonderer Schalter oder Tasten ein im Videorecorder erzeugtes Testbild vorübergehend auf den Modulator geschaltet wird. Dieser Schaltvorgang kann auch - wie es in der Patentschrift DE 34 06 890 C2 der Anmelderin beschrieben ist - durch die Eingabe einer Codezahl über die Zehnertastatur am Bedienfeld bzw. der Fernbedienung des Videorecorders ausgelöst werden. Das genannte Testbild erscheint dann auf dem Bildschirm des an den Videorecorder angeschlossenen Fernsehempfängers und kann in grundsätzlich bekannter Art und Weise zur Einstellung der Bildqualität verwendet werden.

In der Praxis hat sich jedoch gezeigt, daß der genannte Abstimmvorgang - insbesondere für technische Laien - nach wie vor Schwierigkeiten bereitet. Insbesondere ist es auch notwendig, die Bedienungsanleitung des Videorecorders aufmerksam zu lesen, um zu wissen, mittels welcher Schalter oder Tasten bzw. unter Verwendung welcher Codezahl man die Anschaltung des Testbildes erreichen kann. Ausgehend von diesem Stand der Technik liegt der Erfindung die Aufgabe zugrunde, eine Einrichtung anzugeben, mittels der die Abstimmung eines Videorecorders weiter vereinfacht ist.

Diese Aufgabe wird durch die im Patentanspruch 1 angegebenen Merkmale gelöst. Vorteilhafte Weiterbildungen ergeben sich aus den Unteransprüchen.

Die Vorteile der Erfindung liegen insbesondere darin, daß - sobald ein Videorecorder mit einem Fernsehempfänger verbunden ist - auf dem Bildschirm des Fernsehempfängers automatisch ein zur Abstimmung geeignetes Signal erscheint. Eine manuelle Zuschaltung eines Testbildes durch Betätigung besonderer Schalter oder Tasten bzw. durch Eingabe einer bestimmten Codezahl ist nicht mehr notwendig. Weitere vorteilhafte Eigenschaften ergeben sich aus einem Ausführungsbeispiel, welches im folgenden anhand der (einzigen) Figur näher erläutert wird.

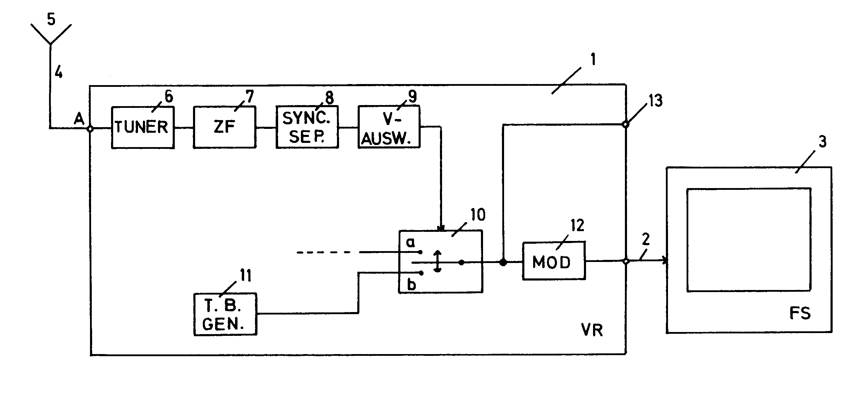

Die Figur zeigt einen Videorecorder 1, der über ein HF-Kabel 2 an einen Fernsehempfänger 3 angeschlossen ist. Der Videorecorder 1 besitzt einen Antenneneingang A, der über ein Antennenkabel 4 mit einer Empfangsantenne 5 verbunden ist. Das am Antenneneingang A anliegende Signal wird dem Empfangsteil des Videorecorders 3, bestehend aus dem Tuner 6 und der ZF-Stufe 7, zugeführt. Aus dem Ausgangssignal der ZF-Stufe 7 wird in einem Synchronsignalseparator 8 das Synchronsignalgemisch vom Nutzsignal getrennt. In einer Vertikalsynchronsignal-Auswertestufe 9 wird überprüft, ob normgerechte Vertikalsynchronsignale vorliegen oder nicht. Beim Fehlen von normgerechten Vertikalsynchronsignalen steuert die Auswertestufe den Schalter 10 in seine Schaltstellung b. In dieser Schaltstellung b ist der Schalter 10 für das Ausgangssignal des Testbildgenerators 11 des Videorecorders 1 durchlässig. Dieses Ausgangssignal des Testbildgenerators 11 wird über den Schalter 10 dem Modulator 12 des Videorecorders zugeführt. Das Ausgangssignal des Modulators 12 wird über das HF-Kabel 2 dem Fernsehempfänger 3 zugeführt und auf dessen Bildschirm als Testbild dargestellt. Dieses Testbild wird in grundsätzlich bekannter Art und Weise zur Einstellung der Bildqualität verwendet.

Bei der beschriebenen Einrichtung wird folglich immer dann, wenn kein normgerechtes Signal zur Verfügung steht, sondern beispielsweise nur Rauschen anliegt ( wie bei fehlendem Antennensignal, falscher Abstimmung oder Umschaltung auf einen "leeren" Kanal ) am Ausgang des Videorecorders automatisch ein Testbild zur Verfügung gestellt. Dies bedeutet eine wesentliche Vereinfachung beim Abstimmvorgang.

Alternativ zu den Vertikalsynchronsignalen können in der Auswertestufe 8,9 natürlich auch die Horizontalsynchronsignale oder andere fernsehsignalspezifische Größen ausgewertet und bei deren Fehlen der Testbildgenerator 11 automatisch mit dem Ausgang des Videorecorders verbunden werden.

Eine vorteilhafte Weiterbildung der Erfindung besteht darin, daß Ausgangssignal eines (nicht gezeichneten) Zeichengenerators zur Darstellung eines beliebigen Schriftzuges in das Testbild einzublenden. So kann der Zeichengenerator beispielsweise dazu verwendet werden, am Bildschirm symbolisch oder alphanumerisch anzuzeigen, daß am Ausgang des Empfangsteiles kein Nutzsignal vorhanden ist. Ferner kann bei bereits erfolgter Abstimmung und Umschaltung auf einen "leeren" Kanal der Schriftzug
"LEERKANAL"
angezeigt werden.

Falls das Ausgangssignal des Videorecorders unter Umgehung des Modulators als videofrequentes Signal direkt dem Ausgang (13) zugeführt und von dort aus zu einem videofrequenten Eingang des Fernsehempfängers geleitet wird, erscheint mit Hilfe der erfindungsgemäßen Einrichtung immer dann ein Testbild auf dem Bildschirm des Fernsehempfängers, wenn am Ausgang des Empfangsteiles (6,7) des Videorecorders (1) kein Nutzsignal anliegt. Dieser Betriebszustand signalisiert somit die Notwendigkeit der Abstimmung des Videorecorder-Empfangsteiles (6,7) oder das Fehlen eines Antennensignals am Eingang A des Videorecorder-Empfangsteiles (6,7).

## Patentansprüche

1. Einrichtung zur Abstimmung eines Videorecorders auf einen Fernsehempfänger, mit einem im Videorecorder angeordneten Testbildgenerator, dessen Ausgangssignal über einen Schalter dem Ausgang des Videorecorders zugeführt und als Testbild auf dem Bildschirm des angeschlossenen Fernsehempfängers dargestellt wird,
**dadurch gekennzeichnet,** daß an den Ausgang des Empfangsteiles (6, 7) des Videorecordes (1) eine Auswertestufe (8, 9) angeschlossen ist, die bei fehlendem Nutzsignal automatisch den Schalter (10) derart steuert, daß der Testbildgenerator (11) mit dem Ausgang des Videorecorders verbunden ist.

2. Einrichtung nach Anspruch 1,
**dadurch gekennzeichnet,** daß der Testbildgenerator (11) über den Modulator (12) mit dem Ausgang des Videorecorders verbunden ist.

3. Einrichtung nach Anspruch 1 oder 2,
**dadurch gekennzeichnet,** daß die Auswertestufe (8, 9) erkennt, ob am Ausgang des Empfangsteiles (6, 7) normgerechte Vertikalsynchronsignale anliegen oder nicht und beim Fehlen von normgerechten Vertikalsynchronsignalen automatisch den Schalter (10) derart steuert, daß der Testbildgenerator (11) mit dem Ausgang des Videorecorders verbunden ist.

4. Einrichtung nach Anspruch 1,
**dadurch gekennzeichnet,** daß
die Auswertestufe (8, 9) erkennt, ob am Ausgang des Empfangsteiles (6, 7) normgerechte Horizontalsynchronsignale anliegen oder nicht und beim Fehlen von normgerechten Horizontalsynchronsignalen automatisch den Schalter (10) derart steuert, daß der Testbildgenerator (11) mit dem Ausgang des Videorecorders verbunden ist.

5. Einrichtung nach einem oder mehreren der vorhergehenden Ansprüche,
**dadurch gekennzeichnet,** daß sie einen Zeichengenerator enthält, dessen Ausgangssignal zur Einblendung eines Schriftzuges in das Testbild verwendet wird.

## Claims

1. Device for tuning a video recorder to a television receiver, comprising a test pattern generator arranged in the video recorder, the output signal of which test pattern generator is supplied via a switch to the output of the video recorder and is displayed as test pattern on the screen of the connected television receiver, characterized in that the output of the receiving section (6, 7) of the video recorder (1) is connected to an evaluating stage (8, 9) which, when the information signal is missing, automatically controls the switch (10) in such a manner that the test pattern generator (11) is connected to the output of the video recorder.

2. Device according to Claim 1, characterized in that the test pattern generator (11) is connected to the output of the video recorder via the modulator (12).

3. Device according to Claim 1 or 2, characterized in that the evaluating stage (8, 9) recognizes whether standard vertical synchronization signals are present at the output of the receiving section (6, 7) or not and when standard vertical synchronization signals are missing, automatically controls the switch (10) in such a manner that the test pattern generator (11) is connected to the output of the video recorder.

4. Device according to Claim 1, characterized in that the evaluating stage (8, 9) recognizes whether standard horizontal synchronization signals are present at the output of the receiving section (6, 7) or not and, when standard horizontal synchronization signals are missing, automatically controls the switch (10) in such a manner that the test pattern generator (11) is connected to the output of the video recorder.

5. Device according to one or more of the preceding claims, characterized in that it contains a character generator, the output signal of which is used for inserting a line of writing into the test pattern.

## Revendications

1. Dispositif de réglage d'accord d'un magnétoscope sur un récepteur de télévision, comportant un générateur d'images de test disposé dans le magnétoscope et dont le signal de sortie est envoyé par l'intermédiaire d'un commutateur à la sortie du magnétoscope et est représenté, en tant qu'image de test, sur l'écran du récepteur de télévision raccordé, caractérisé en ce qu'à la sortie de la partie de réception (6, 7) du magnétoscope (1) est raccordé un étage d'évaluation (8, 9), qui, dans le cas de l'absence d'un signal utile, commute automatiquement le commutateur (10) de telle sorte que le générateur d'images de test (11) est raccordé à la sortie du magnétoscope.

2. Dispositif selon la revendication 1, caractérisé en ce que le générateur d'images de test (11) est raccordé par l'intermédiaire du modulateur (12) à la sortie du magnétoscope.

3. Dispositif selon la revendication 1 ou 2, caractérisé en ce que l'étage d'évaluation (8, 9) identifie si des signaux de synchronisation verticale normalisés sont présents ou non à la sortie de la partie de réception (6, 7), et, dans le cas de l'absence de signaux de synchronisation verticale normalisés, commande automatiquement le commutateur (10) de telle sorte que le générateur (11) d'images de test est relié à la sortie du magnétoscope.

4. Dispositif selon la revendication 1, caractérisé en ce que l'étage d'évaluation (8, 9) identifie si des signaux de synchronisation horizontale normalisés sont présents ou non à la sortie de la partie de réception (6, 7), et, dans le cas de l'absence de signaux de synchronisation horizontale normalisée, commande automatiquement le commutateur (10) de telle sorte que le générateur (11) d'images de test est relié à la sortie du magnétoscope.

5. Dispositif selon une ou plusieurs des revendications précédentes, caractérisé en ce qu'il contient un générateur de signaux, dont le signal de sortie est utilisé pour insérer une mention dans l'image de test.
